# EUROPÄISCHE PATENTSCHRIFT

(11) **EP 1 685 017 B1**
(45) Veröffentlichungstag und Bekanntmachung des Hinweises auf die Patenterteilung: **16.02.2011**
(21) Anmeldenummer: 04798197.2
(22) Anmeldetag: 11.11.2004
(51) Int. Cl.: B62D 5/00

(54) **MOMENTENSTELLER FÜR EIN LENKSYSTEM IN EINEM KRAFTFAHRZEUG**
TORQUE ADJUSTER FOR A STEERING SYSTEM IN A MOTOR VEHICLE
DISPOSITIF DE COMMANDE DE COUPLE CON U POUR UN SYSTEME DE DIRECTION DE VEHICULE AUTOMOBILE

(30) Priorität: 11.11.2003 DE 10352494
(43) Veröffentlichungstag der Anmeldung: 02.08.2006
(73) Patentinhaber: ROBERT BOSCH GMBH, 70442 Stuttgart (DE)
(72) Erfinder: PFEIFFER, Wolfgang, 71723 Grossbottwar (DE); MAYER, Werner, 70736 Fellbach (DE); HARTER, Werner, 75428 Illingen (DE); KOEPERNIK, Jochen, 03639 Schortewitz (DE)
(86) Internationale Anmeldenummer: PCT/EP2004/052917
(87) Internationale Veröffentlichungsnummer: WO 2005/047080

(56) Entgegenhaltungen:
- EP-A- 1 219 525
- WO-A2-01/72571
- DE-A1- 10 037 829
- DE-A1- 10 053 818
- DE-A1- 10 112 514
- DE-A1- 19 833 460
- DE-A1- 19 834 870

## Beschreibung

Die Erfindung betrifft einen Momentensteller für ein Lenksystem in einem Kraftfahrzeug zur Ansteuerung einer Lenkeinrichtung sowie ein Lenksystem mit mehreren solcher Momentenstellern.

Momentensteller sind zur Steuerung und/oder Überwachung von Lenkeinrichtungen eines Kraftfahrzeuges vorgesehen. Unter einer Lenkeinrichtung versteht man dabei einerseits eine Lenkhandhabe, wie beispielsweise ein Lenkrad, aber auch ein gelenktes Fahrzeugrad oder eine gelenkte Fahrzeugachse. Momentensteller kommen als Komponenten elektrischer bzw. elektronischer Regelstrecken zur Verbindung einer Lenkhandhabe und mindestens eines gelenkten Fahrzeugrades in einem Kraftfahrzeug zum Einsatz. Derartige elektrische bzw. elektronische Regelstrecken werden als Steer-by-Wire-Systeme bezeichnet und ersetzen herkömmliche Lenksysteme, bei denen gelenkte Fahrzeugräder mit der Lenkhandhabe mechanisch gekoppelt sind.

Die Druckschrift DE 198 334 60 A1 beschreibt ein Lenksystem zur Beaufschlagung bzw. Ansteuerung von Fahrzeugrädern. Dabei ist stets ein mechanischer Durchgriff von dem Lenkrad auf die anzulenkenden Räder vorhanden. Das Lenksystem weist zwei Subsysteme mit jeweils einem Prozessrechner zur Berechnung von Steuerungsaufgaben, je einem Stellmotor, je einem Untersetzungsgetriebe und je einer Leistungsendstufe auf. Die beiden gleichartige Subsysteme haben die Aufgabe, einander insbesondere beim Auftreten eines Fehlers zu ergänzen, so daß das Lenksystem auch im Fehlerfall funktionsfähig bleibt.

Aufgrund diverse Verkabelungen einzelner Komponenten des einen Subsystems zu einzelnen Komponenten des anderen Subsystems ist eine Unabhängigkeit des einen Subsystems von dem anderen Subsystem nicht gegeben. Dies kann zur Folge halben, daß sich eine, wenn auch nur teilweise, Funktionsuntüchtigkeit eines Subsystems auf das andere Subsystem auswirkt, was zu einher Beeinträchtigung oder einem Ausfall des gesamten Lenksystems führen kann.

Die Druckschrift DE 198 348 70 A1 beschreibt ein Steer-by-Wirc-System, das in zwei diversitär reduntante Systeme unterteilt ist, mit zwei Stellmotoren, zwei Ansteuereinheiten sowie zwei diversitär redundanten Prozessrechnern. Jeder der beiden Prozeßrechner erhält über einen Datenkanal von einem gemeinsamen übergeordneten Fahrzeugrechner Informationen über den Fahrzustand oder auch den einzustellenden Soll-Lenkwinkel. Weiterhin ist vorgesehen, daß ein Prozeßrechner des einen Systems im Fehlerfall das jeweils andere System abschalten kann. Auch bei diesem Stand der Technik ist eine gegenseitige Beeinflussung der beiden Systeme vorgesehen. Ein Fehler innerhalb des einen Systems kann sich auf das andere System auswirken und somit das gesamte Lenksystem in seiner Funktion beeinträchtigen.

Die WO/0172571 A2 zeigt einen Momentensteller gemäß dem Oberbeggriff des Anspruchs 1, bei dem die elektrischen Einheiten mit Schaltern abschaltbar sind. Die elektrischen Einheiten umfassen dabei auch Rechner und Endstufen. Mittels der Schalter sind somit sowohl die Rechner als auch die Endstufen einer Einheit nur gemeinsam abschaltbar.

Die Aufgabe der Erfindung besteht darin, eine sichere und einfache/kostengünstige Absicherung der Einheiten zu gewährleisten.

Diese Aufgabe wird mit einem Momenstansteller mit den Merkmalen des Anspruchs 1 bzw. mit einem Lenksystem mit den Merkmalen des Anspruchs 3 erreicht.

Der erfindungsgemäße Momentensteller für ein Lenksystem in einem Kraftfahrzeug dient zur Ansteuerung einer Lenkeinrichtung, wobei diese Lenkeinrichtung eine Lenkhandhabe oder ein gelenktes Fahrzeugrad bzw. eine gelenkte Fahrzeugachse sein kann. Der Momentensteller umfaßt wenigstens zwei elektrische Einheiten, wobei jeder der elektrischen Einheiten eine eigene, über mindestens eine Sicherung verbundene Stromversorgungseinheit zugeordnet ist.

Da die elektrischen Einheiten des Mnmentenstellers unabhängig voneinander arbeiten und auch jeweils über eine eigene Stromversorgung verfügen beeinflussen sie sich nicht gegenseitig. Der Momentensteller bleibt auch bei Ausfall einer der elektrischen Einheit oder einer der Stromversorgungseinheiten funktionstüchtig.

Daraus ergibt sich vorteilhafterweise, daß jede elektrische Einheit eigensicher und eigenständig ist. Somit ist gewährleistet, daß sich elektrische Einheiten untereinander nicht, insbesondere nicht nachteilig, beeinflussen können. Der erfindungsgemäße Momentensteller weist demnach wenigstens zwei Subsysteme auf. Aufgrund der Unabhängigkeit dieser wenigstens zwei Subsysteme ist ausgeschlossen, daß eine teilweise oder gar vollständige Funktionsuntüchtigkeit eines Subsystems die Funktionstüchtigkeit eines anderen Subsystems und somit die Funktionsfähigkeit des Momentenstellers beeinträchtigt.

Eine elektrische Einheit kann als einzelne Bestandteile jeweils eine Recheneinheit und eine Endstufeneinheit aufweisen, die zusammenwirken. Eine Verbindung einer elektrischen Einheit oder eines einzelnen Bestandteils einer elektrischen Einheit mit der zugeordneten Stromversorgungseinheit kann über eine Zuleitung erfolgen, entlang der wenigstens eine Sicherung angeordnet ist. Durch diese Maßnahme läßt sich eine Absicherung einer jeden elektrischen Einheit oder sogar eine Absicherung eines jeden einzelnen Bestandteils einer elektrischen Einheit realisieren. Dies hat zum Vorteil, daß ein einzelner Fehler bzw. eine Abschaltung eines einzelnen Bestandteils innerhalb einer elektrischen Einheit nicht zur Abschaltung der anderen elektrischen Einheit führt. Somit ist gewährleistet, daß einem Momentensteller mindestens eine elektrische Einheit zur Übertragung von Steuerbefehlen zur Verfügung steht.

In Ausgestaltung des erfindungsgemäßen Momentenstellers sind die elektronische Recheneinheit und die Endstufeneinheit mindestens einer der elektrischen Einheiten über eine der Sicherungen mit der zugeordneten Stromversorgung verbunden.

Der Recheneinheit ist vorzugsweise wenigstens ein Sensor zur Überwachung einer Lenkeinrichtung und der Endstufeneinheit wenigstens ein Aktor zur Steuerung einer Lenkeinrichtung zugeordnet. Hierdurch ist gewährleistet, daß eine elektrische Einheit eigenständig Steuerbefehle mittels eines Aktors an die Lenkeinrichtung weiterleiten kann. Zudem kann die elektrische Einheit mittels des Sensors die Lenkeinrichtung überwachen bzw. Befehle von der Lenkeinrichtung empfangen.

In weiterer Ausgestaltung der Erfindung ist ein Momentensteller als Handmomentensteller zur Steuerung und/oder Überwachung einer Lenkhandhabe ausgebildet. Ebenso kann ein Momentensteller als Radmomentensteller zur Steuerung und/oder Überwachung wenigstens eines gelenkten Fahrzeugrades ausgebildet sein. Der erfindungsgemäße Momentensteller kann vorzugsweise unterschiedliche Steuerungs- und/oder Überwachungsaufgaben innerhalb eines Lenksystems übernehmen.

In bevorzugter Ausgestaltung kann eine elektrische Einheit in einem eigenem Gehäuse angeordnet sein. Bei Vorhandensein mehrerer Momentensteller innerhalb eines Lenksystems, z. B. wenigstens zwei Handmomentensteller und zwei Radmomentensteller innerhalb eines Lenksystems, ist deren getrennte Unterbringung in eigenen Gehäusen von Vorteil. Durch diese Maßnahme ist auf besonders einfache Weise erreichbar, daß Common-Mode-Fehler vermieden werden. Somit können sich elektrische Einheiten in ihrer Funktionstüchtigkeit untereinander nicht beeinträchtigen.

Das erfindungsgemäße Lenksystem weist zumindest einen ersten und einen zweiten Momentensteller auf, wobei der erste Momentensteller als Handmomentensteller für eine Lenkhandhabe und der zweite Momentensteller als Radmomentensteller für mindestens ein gelenktes Rad dient.

Selbstverständlich können auch mehr als zwei Momentensteller vorgesehen sein, so daß jeder Lenkeinrichtung mehr als ein Momentensteller zugeordnet ist.

Typischerweise sind bei dem erfindungsgemäßen Lenksystem die Lenkhandhabe und das wenigstens eine gelenkte Fahrzeugrad über eine elektrische bzw. elektronische Regelstrecke miteinander verbunden. Die elektrische bzw. elektronische Regelstrecke kann erfindungsgemäß folgende Komponenten umfassen: wenigstens eine elektrische Einheit für einen Handmomentensteller, wenigstens eine elektrische Einheit für einen Radmomentensteller, wenigstens eine erste Stromversorgungseinheit; wenigstens eine zweite elektrische Einheit für einen Handmomentensteller, wenigstens eine zweite elektrische Einheit für einen Radmomentensteller, wenigstens eine zweite Stromversorgungseinheit.

Das Lenksystem ist in diesem Fall modular aus eigensicheren und eigenständigen elektrischen Einheiten ausgebildet. Sowohl der Hand- als auch der Radmomentensteller verfügen über wenigstens zwei Subsysteme. Der Ausfall einer elektrischen Einheit eines der beiden Momentensteller beeinträchtigt die Funktionstüchtigkeit einer anderen elektrischen Einheit des Momentenstellers nicht. Somit wird ein Momentensteller in seiner Funktionstüchtigkeit durch den Ausfall eines seiner wenigstens zwei Subsysteme nicht beeinträchtigt. Des weiteren wird das gesamte Lenksystem durch den Ausfall eines oder mehrerer Subsysteme verschiedener Momentensteller in seiner Funktionstüchtigkeit nicht beeinträchtigt.

Dabei sind erste elektrische Einheiten mit der wenigstens einen ersten Stromversorgungseinheit verschaltet, und zweite elektrische Einheiten sind mit der wenigstens einen zweiten Stromversorgungseinheit verschaltet. Somit ergibt sich eine zusätzliche Absicherung für das Lenksystem. Der Ausfall einer Stromversorgungseinheit beeinträchtigt in seiner Funktion lediglich ein Subsystem bzw. eine elektrische Einheit eines Momentenstellers. Andere Subsysteme bzw. elektrische Einheiten des Momentenstellers sind hiervon nicht betroffen. Somit wird das gesamte Lenksystem in seiner Funktionstüchtigkeit durch den Ausfall einer Stromversorgungseinheit nicht beeinträchtigt.

Bei einem Steer-by-Wire-System mit zwei ersten elektrischen Einheiten, angeschlossen an eine erste Stromversorgungseinheit, sowie zwei zweiten elektrischen Einheiten, angeschlossen an eine zweite Stromversorgungseinheit, wobei je eine erste und ein zweite elektrische Einheit dem Handmomentensteller und je eine erste und ein zweite elektrische Einheit dem Radmomentensteller zugeordnet sind, bieten sich explizit folgende Möglichkeiten der Verschaltung:
a) zwei erste bzw. zweite elektrische Einheiten sind über jeweils eine Zuleitung mit der ersten bzw. zweiten Stromversorgungseinheit verbunden.
b) eine einzige erste bzw. zweite elektrische Einheit ist über eine eigene Zuleitung mit der ersten bzw. zweiten Stromversorgungseinheit verbunden.
c) zwei gleiche einzelne Bestandteile, insbesondere zwei Recheneinheiten bzw. zwei Endstufeneinheiten der zwei ersten bzw. zweiten elektrischen Einheiten, sind miteinander verschaltet und miteinander über eine Zuleitung mit der ersten bzw. zweiten Stromversorgungseinheit verbunden.
d) ein einzelner Bestandteil, insbesondere eine Recheneinheit bzw. eine Endstufeneinheit einer ersten bzw. zweiten elektrischen Einheit, ist über jeweils eine Zuleitung mit der ersten bzw. zweiten Stromversorgungseinheit verbunden.

Diese vier erfindungsgemäßen Möglichkeiten der Verschaltung können miteinander kombiniert werden, so daß beispielsweise erste Komponenten mit der ersten Stromversorgungseinheit auf andere Weise verschaltet sind als zweite Komponenten mit der zweiten Stromversorgungseinheit.

In weiterer Ausgestaltung des Lenksystems ist vorgesehen, daß bei einem Notbetrieb bzw. einem Ausfall der elektrischen bzw. elektronischen Regelstrecke eine mechanische Kopplung der Lenkhandhabe mit den gelenkten Fahrzeugräder bereitgestellt wird. Hierbei handelt es sich um eine Vorsichtsmaßnahme, falls das erfindungsgemäße Steer-by-Wire-System unter ungünstigsten Umständen ausfällt. Bei Funktion des Lenksystems im Normalbetrieb sorgt eine Kupplung für die Trennung der mechanischen Verbindung zwischen Lenkhandhabe und gelenktem Fahrzeugrad bzw. gelenkten Fahrzeugrädern.

Es kann vorgesehen sein, daß alle elektrischen Einheiten in einem Gehäuse oder die elektrischen Einheiten eines Momentenstellers in einem Gehäuse aufgenommen sind. Alternativ dazu kann für jede elektrische Einheit ein eigenes Gehäuse vorgesehen sein.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der zeichnung schematisch dargestellt und wird im folgenden unter Bezugnahme auf die Zeichnung ausführlich beschrieben.
- Figur 1: zeigt ein schematisches Blockschaltbild zu einer ersten Variante des Lenksystems.
- Figur 2: zeigt ein schematisches Blockschaltbild zu einer zweiten Variante des Lenksystems.
- Figur 3: zeigt ein schematisches Blockschaltbild des erfindungsgemäßen Lenksystems.
- Figur 4: zeigt ein schematisches Blockschaltbild zu einer vierten Variante des Lenksystems.
- Figur 5: zeigt ein schematisches Blockschaltbild zu einer fünften Variante des Lenksystems.
- Figur 6: zeigt ein schematisches Blockschaltbild zu einer sechsten Variante des Lenksystems.

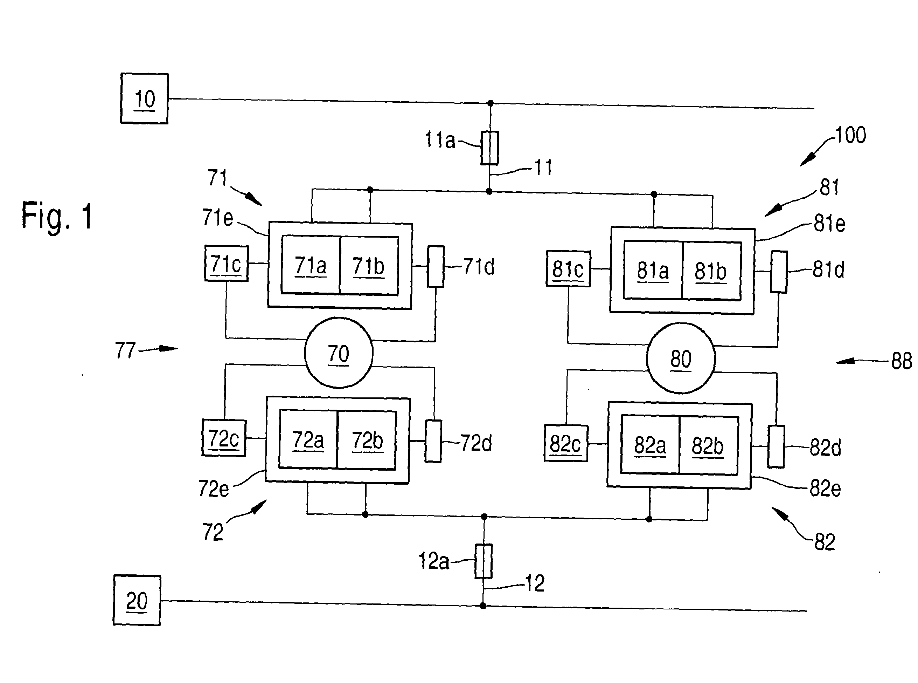

Figur 1 zeigt ein schematisches Blockschaltbild einer ersten Variante des erfindungsgemäßen Lenksystems. Alle nachfolgenden sechs Varianten bauen auf dieser in Figur 1 gezeigten auf. Dabei sind ohne Beschränkung der Allgemeinheit gleiche oder gleichartige Komponenten des Lenksystems, die in allen sechs Figuren abgebildet sind, mit gleichen Bezugszeichen versehen.

Die in den Figuren 1 bis 6 abgebildeten Lenksysteme für Kraftfahrzeuge weisen eine elektrische bzw. elektronische Regelstrecke, ein Steer-by-Wire-System 100, 200, 300, 400, 500, 600, auf. Ein derartiges Steer-by-Wire-System 100, 200, 300, 400, 500, 600 dient, hier in schematischer Darstellung, der Verbindung zwischen einer Lenkhandhabe 70 und wenigstens einem gelenkten Fahrzeugrad 80 bzw. einer gelenkten Fahrzeugachse. Die elektrischen Einheiten werden in den sechs Varianten aus den nachfolgenden Figuren 1 bis 6 als Sub-/Halbsteuergeräte 71, 72, 81, 82 bezeichnet.

Der Lenkhandhabe 70 ist ein Handmomentensteller 77 zugeordnet, dem wenigstens einen gelenkten Fahrzeugrad 80 ist ein Radmomentensteller 88 zugeordnet. Wenigstens eine Fahrzeugachse weist wenigstens ein Fahrzeugrad 80 auf. Eine Fahrzeugachse weist zur Steuerung wenigstens einen Radmomentensteller 88 auf.

Der Radmomentensteller 88 kann zur Beaufschlagung beider Fahrzeugräder einer Fahrzeugachse ausgebildet sein. In einer anderen Ausgestaltung der Erfindung kann vorgesehen sein, daß jeweils einem Fahrzeugrad 80 ein Radmomentensteller 88 zur Steuerung bzw. Überwachung zugeordnet ist, so daß jedes Fahrzeugrad 80 individuell gelenkt werden kann. Der Handmomentensteller 77 ist aus einem ersten Sub-/Halbsteuergerät 71 und einem zweiten Sub/Halbsteuergeräts 72 zusammengesetzt. Entsprechend umfaßt der Radmomentsteller 88 ein erstes Sub-/Halbsteuergerät 81 und ein zweites Sub-/Halbsteuergerät 82.

Jedes Sub-/Halbsteuergerät 71, 72, 81, 82 weist folgende einzelne Bestandteile auf: Eine Recheneinheit 71a, 72a, 81a, 82a und eine Endstufeneinheit 71b, 72b, 81b, 82b. Die Recheneinheit 71a, 72a, 81a, 82a eines Sub/Halbsteuergeräts 71, 72, 81, 82 ist mit der Endstufeneinheit 71b, 72b, 81b, 82b desselben Sub/Halbsteuergeräts 71, 72, 81, 82 verbunden. Zudem ist jedem Sub-/Halbsteuergerät 71, 72, 81, 82 bzw. jeder Recheneinheit 71a, 72a, 81a, 82a ein Sensor 71c, 72c, 81c, 82c zugeordnet.

Sensoren 71c, 72c, 81c, 82c sind zur Überwachung der Momentensteller, beispielsweise des Handmomentenstellers 70 oder des Radmomentenstellers 80, ausgebildet. Außerdem ist jedem Sub-/Halbsteuergerät 71, 72, 81, 82 bzw. jeder Endstufeneinheit 71b, 72b, 81b, 82b ein Aktor 71d, 72d, 81d, 82d zugeordnet. Aktoren 71d, 72d, 81d, 82d sind zur Steuerung oder Beaufschlagung der Momentensteller ausgebildet. Zudem ist bei allen sechs Varianten vorgesehen, daß jedes Sub-/Halbsteuergerät 71, 72, 81, 82 bzw. dessen einzelne Bestandteile, die Recheneinheit 71a, 72a, 81a, 82a sowie die Endstufeneinheit 71b, 72b, 81b, 82b in einem eigenen Gehäuse 71e, 72e, 81e, 82e untergebracht sind.

Durch geeignete Verschaltung bzw. Zuleitungen sind die beiden ersten Sub-/Halbsteuergeräte 71, 81 bzw. deren einzelne Bestandteile, Recheneinheit 71a, 81a bzw. Endstufeneinheit 71b, 81b mit einer ersten Stromversorgungseinheit 10 verbunden, die sie mit elektrischer Energie versorgt. Analog sind durch geeignete Verschaltung bzw. Zuleitungen die beiden zweiten Sub-/Halbsteuergeräte 72, 82 bzw. deren einzelne Bestandteile, Recheneinheit 72a, 82a bzw. Endstufeneinheit 72b, 82b mit einer zweiten Stromversorgungseinheit 20 verbunden, die sie mit elektrischer Energie versorgt. Bei allen sechs in den Figuren 1 bis 6 dargestellten Varianten des erfindungsgemäßen Lenksystems bzw. Steer-by-Wire-Systems 100, 200, 300, 400, 500, 600 ist die erste Stromversorgungseinheit 10 unabhängig von der zweiten Stromversorgungseinheit 20. Demzufolge arbeiten die ersten Sub-/Halbsteuergeräte 71, 81 unabhängig von den zweiten Sub-/Halbsteuergeräten 72, 82.

Die voneinander unabhängigen Stromversorgungseinheiten 10, 20 liefern denselben elektrischen Spannungswert oder unterschiedliche Spannungswerte. Ein Wert für die Spannung der ersten Stromversorgungseinheit 10 ist beispielsweise 42 V, ein Wert für die Spannung der zweiten Stromversorgungseinheit 20 ist beispielsweise 14 V.

Ein möglicher, auch nur teilweiser Ausfall des ersten Sub-/Halbsteuergerätes 71 kann durch das zweite Sub-/Halbsteuergerät 72 kompensiert werden und umgekehrt. Lenksignale des Handmomentenstellers 77 werden trotz funktioneller Beeinträchtigung eines der beiden Sub-/Halbsteuergeräte 71, 72 durch das jeweils andere zuverlässig weiterverarbeitet. Entsprechend wird ein möglicher, auch nur teilweiser Ausfall des ersten Sub-/Halbsteuergerätes 81 durch das zweite Sub-/Halbsteuergerät 82 kompensiert und umgekehrt. Lenksignale für den Radmomentensteller 88 werden trotz funktioneller Beeinträchtigung eines der beiden Sub-/Halbsteuergeräte 81, 82 durch das jeweils andere zuverlässig weiterverarbeitet. Jedes Steer-by-Wire-System 100, 200, 300, 400, 500, 600 besteht aus vier eigensicheren und eigenständigen Sub/Halbsystemen 71, 72, 81, 82 mit eigener Sensorik und Aktorik.

In den sechs Figuren werden sechs unterschiedliche Varianten für die Anordnung von Zuleitungen bzw. Sicherungen dargestellt. Kombinationen unterschiedlicher Varianten bzw. einzelner Merkmale unterschiedlicher Varianten sind durchaus möglich.

In der in Figur 1 dargestellten ersten Variante des erfindungsgemäßen Steer-by-Wire-System 100 sind die ersten Sub-/Halbsteuergeräte 71, 81 über eine gemeinsame Zuleitung 11 mit der ersten Stromversorgungseinheit 10 verbunden. In der Zuleitung 11 ist eine Sicherung 11a angeordnet. Die zweiten Sub-/Halbsteuergeräte 72, 82 sind über eine gemeinsame Zuleitung 12 mit der zweiten Stromversorgungseinheit 20 verbunden. In der Zuleitung 12 ist eine Sicherung 12a angeordnet. Je zwei erste bzw. zweite Sub-/Halbsteuergeräte 71, 81 bzw. 72, 82 sind über eine Sicherung 11a, 12a mit der ersten bzw. zweiten Stromversorgung 10 bzw. 20 verbunden. Die beiden Versorgungsanschlüsse der Rechen- und Endstufeneinheit 71a, 71b; 81a, 81b; 72a, 72b; 82a, 82b innerhalb eines Sub/Halbsteuergeräts 71, 81, 72, 82 sind miteinander verbunden.

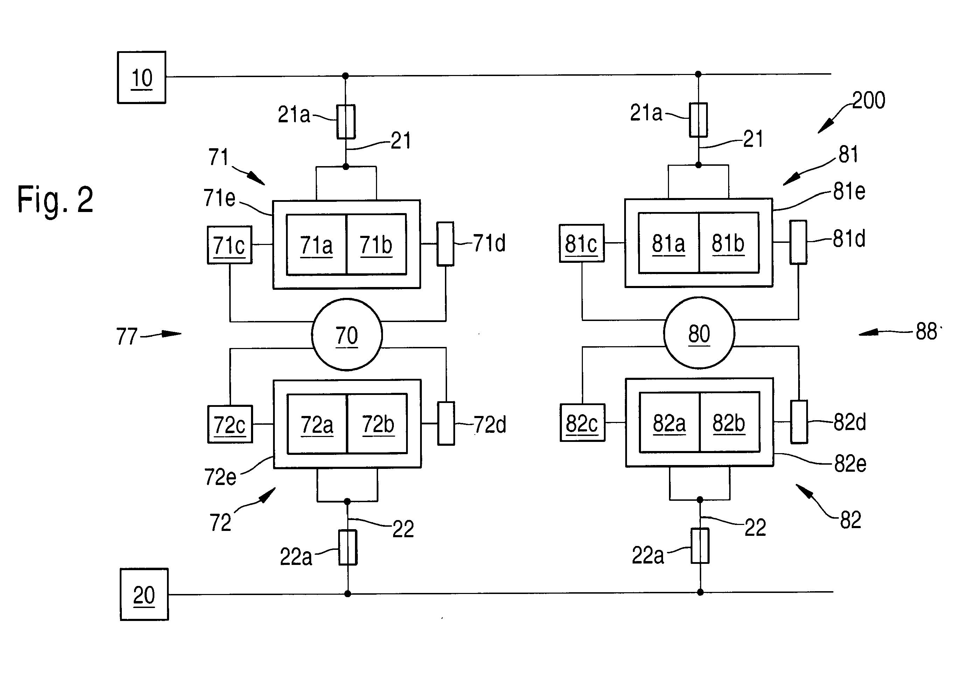

In der in Figur 2 dargestellten zweiten Variante eines Steer-by-Wire-Systems 200 ist jedes erste Sub-/Halbsteuergerät 71, 81 über eine eigene Zuleitung 21 mit der ersten Stromversorgungseinheit 10 verbunden. In der Zuleitung 21 ist eine Sicherung 21a angeordnet. Jedes zweite Sub-/Halbsteuergerät 72, 82, ist über eine eigene Zuleitung 22 mit der zweiten Stromversorgungseinheit 20 verbunden. In der Zuleitung 22 ist eine Sicherung 22a angeordnet. Das bedeutet, daß jedes Sub-/Halbsteuergerät 71, 81, 72, 82, bestehend aus einer Recheneinheit 71a, 81a, 72a, 82a, einer Endstufeneinheit 71b, 81b, 72b, 82b, einem Sensor 71c, 81c, 72c, 82c sowie einem Aktor 71d, 81d, 72d, 82d, über eine eigene Sicherung 21a, 22a verfügt und somit eigenständig ist.

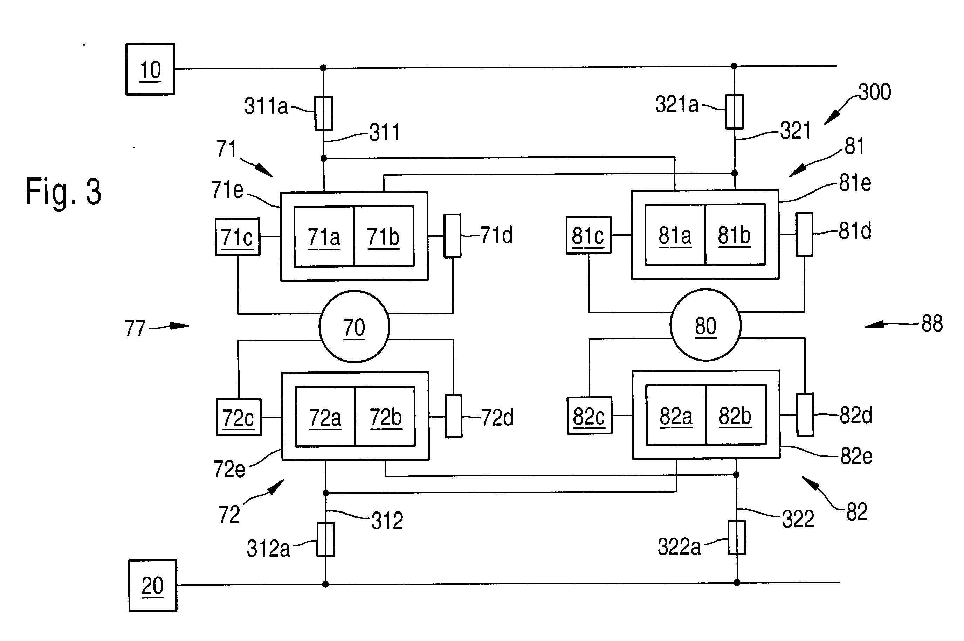

In der in Figur 3 gezeigten dritten Variante eines Steer-by-Wire-Systems 300 sind die beiden ersten Recheneinheiten 71a, 81a der ersten Sub-/Halbsteuergeräte 71, 81 miteinander verschaltet und über eine Zuleitung 311, in der eine Sicherung 311a angeordnet ist, mit der ersten Stromversorgungseinheit 10 verbunden. Ebenso sind die beiden zweiten Recheneinheiten 72a, 82a der zweiten Sub-/Halbsteuergeräte 72, 82 miteinander verschaltet und über eine Zuleitung 312, in der eine Sicherung 312a angeordnet ist, mit der zweiten Stromversorgungseinheit 20 verbunden.

Entsprechend sind die beiden ersten Endstufeneinheiten 71b, 81b der ersten Sub-/Halbsteuergeräte 71, 81 miteinander verschaltet und über eine Zuleitung 321, in der eine Sicherung 321a angeordnet ist, mit der ersten Stromversorgungseinheit 10 verbunden. Ebenso sind die beiden zweiten Endstufeneinheiten 72b, 82b der zweiten Sub-/Halbsteuergeräte 72, 82 miteinander verschaltet und über eine Zuleitung 322, in der eine Sicherung 322a angeordnet ist, mit der zweiten Stromversorgungseinheit 20 verbunden.

Eine Recheneinheit 71a, 72a vom Handmomentensteller 70 sowie eine Recheneinheit 81a, 82a von dem Radmomentensteller 80 werden über eine gemeinsame Sicherung 311a, 312a entweder mit der ersten Stromversorgungseinheit 10 oder mit der zweiten Stromversorgungseinheit 20 verbunden. Ebenso werden eine Endstufeneinheit 71b, 72b von dem Handmomentensteller 70 sowie eine Endstufeneinheit 81b, 82b von dem Radmomentensteller 80 über eine gemeinsame Sicherung 321a, 322a entweder mit der ersten Stromversorgungseinheit 10 oder mit der zweiten Stromversorgungseinheit 20 verbunden.

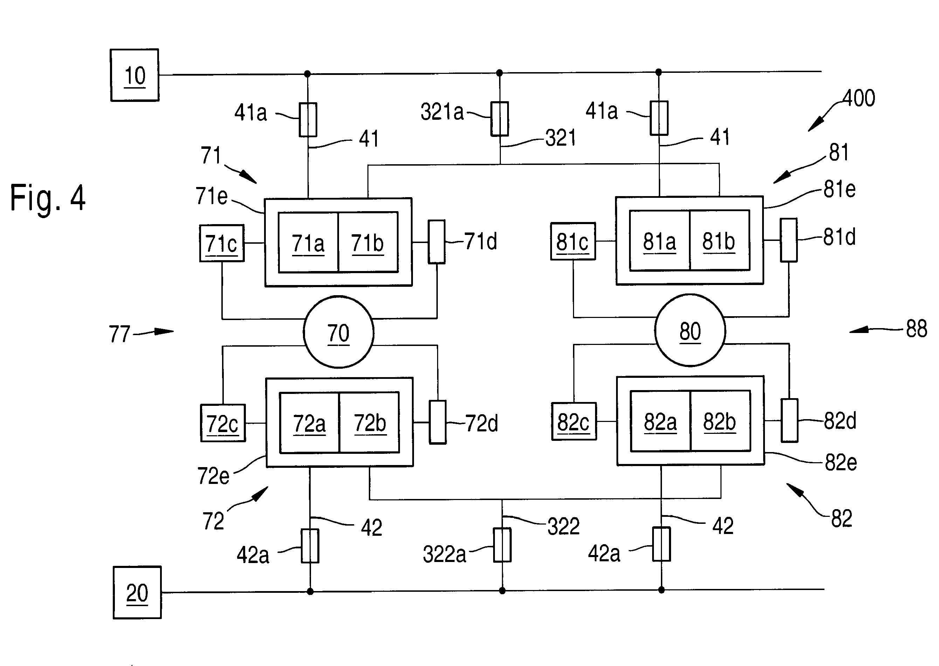

In der in Figur 4 gezeigten vierten Variante eines Steer-by-Wire-Systems 400 ist jeweils eine erste Recheneinheit 71a, 81a der ersten Sub-/Halbsteuergeräte 71, 81 über jeweils eine Zuleitung 41, in der eine Sicherung 41a angeordnet ist, mit der ersten Stromversorgungseinheit 10 verbunden. Die beiden erste Endstufeneinheiten 71b, 81b der beiden ersten Sub-/Halbsteuergeräte 71, 81 sind miteinander verschaltet und über eine Zuleitung 321, in der eine Sicherung 321a angeordnet ist, mit der ersten Stromversorgungseinheit 10 verbunden.

Demgemäß ist jeweils eine zweite Recheneinheit 72a, 82a der zweiten Sub-/Halbsteuergeräte 72, 82 über jeweils eine Zuleitung 42, in der eine Sicherung 42a angeordnet ist, mit der zweiten Stromversorgungseinheit 20 verbunden. Die beiden zweiten Endstufeneinheiten 72b, 82b der beiden zweiten Sub-/Halbsteuergeräte 72, 82 sind miteinander verschaltet und über eine Zuleitung 322, in der eine Sicherung 322a angeordnet ist, mit der zweiten Stromversorgungseinheit 20 verbunden. Jede Recheneinheit 71a, 81a, 72a, 82a ist über eine eigene Sicherung 41a, 42a entweder mit der ersten oder zweiten Stromversorgungseinheit 10, 20 verbunden. Zwei Endstufeneinheiten 71b, 72b; 81b, 82b, je eine des Handmomenten- und Radmomentenstellers 70, 80, werden über eine gemeinsame Sicherung 311a, 312a entweder mit der ersten oder zweiten Stromversorgungseinheit 10, 20 verbunden.

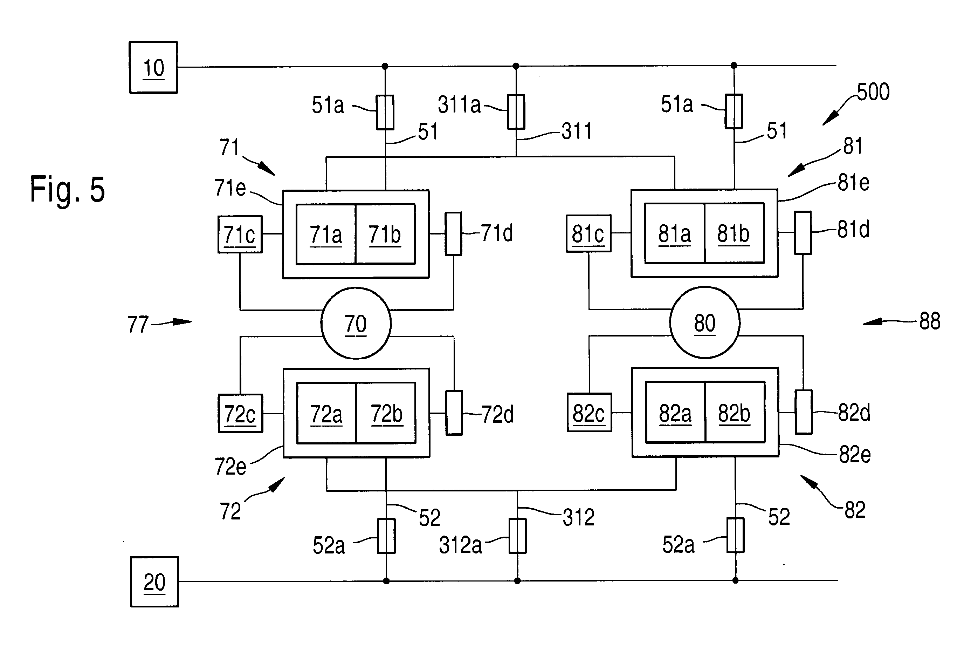

In der in Figur 5 gezeigten fünften Variante eines Steer-by-Wire-Systems 500 ist jeweils eine erste Endstufeneinheit 71b, 81b der ersten Sub-/Halbsteuergeräte 71, 81 über jeweils eine Zuleitung 51, in der eine Sicherung 51a angeordnet ist, mit der ersten Stromversorgungseinheit 10 verbunden. Die beiden ersten Recheneinheiten 71a, 81a der beiden ersten Sub-/Halbsteuergeräte 71, 81 sind miteinander verschaltet und über eine Zuleitung 311, in der eine Sicherung 311a angeordnet ist, mit der ersten Stromversorgungseinheit 10 verbunden.

Dementsprechend ist jeweils eine zweite Endstufeneinheit 72b, 82b der zweiten Sub-/Halbsteuergeräte 72, 82 über jeweils eine Zuleitung 52, in der eine Sicherung 52a angeordnet ist, mit der zweiten Stromversorgungseinheit 20 verbunden. Die beiden zweiten Recheneinheiten 72a, 82a der beiden zweiten Sub-/Halbsteuergeräte 72, 82 sind miteinander verschaltet und über eine Zuleitung 312, in der eine Sicherung 312a angeordnet ist, mit der zweiten Stromversorgungseinheit 20 verbunden. Zwei Recheneinheiten 71a, 72a; 81a, 82a, je eine vom Handmomenten- und Radmomentensteller 70, 80, werden über eine gemeinsame Sicherung 311, 312 mit der ersten oder zweiten Stromversorgungseinheit 10, 20 verbunden. Jede Endstufeneinheit 71b, 81b, 72b, 82b ist über eine eigene Vorsicherung 51, 52 mit der ersten oder zweiten Stromversorgungseinheit 10, 20 verbunden.

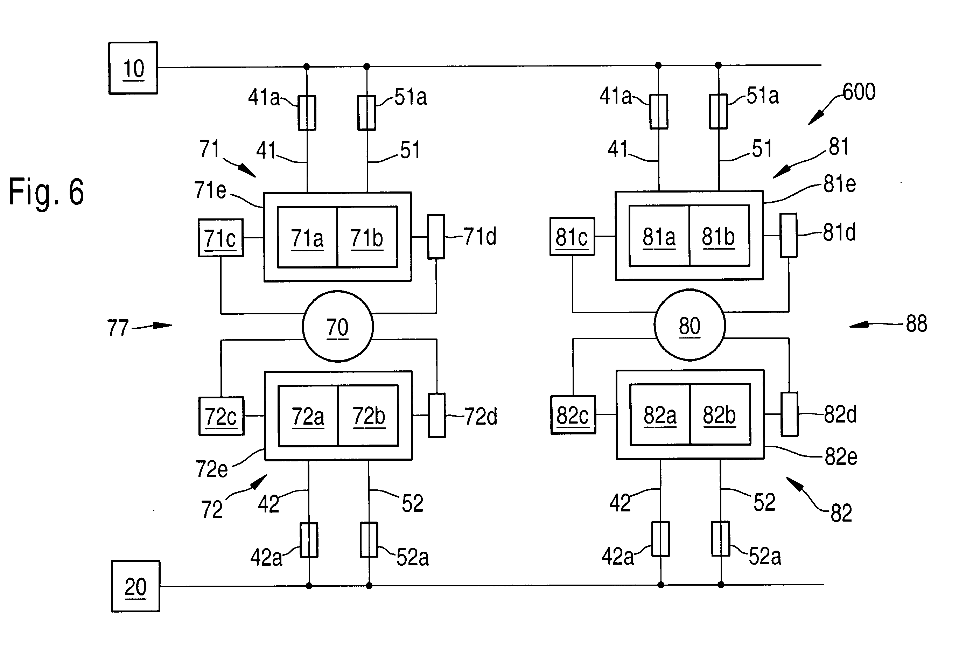

In der in Figur 6 gezeigten sechsten Variante eines Steer-by-Wire-Systems 600 ist jeder einzelne Bestandteil der ersten Sub-/Halbsteuergeräte 71, 81, d. h. jede erste Recheneinheit 71a, 81a über jeweils eine eigene Zuleitung 41, in der eine Sicherung 41a angeordnet ist, mit der ersten Stromversorgungseinheit 10 verbunden. Und jede erste Endstufeneinheit 71b, 81b ist über eine eigene Zuleitung 51, in der eine Sicherung 51a angeordnet ist, mit der ersten Stromversorgungseinheit 10 verbunden.

Entsprechend ist jeder einzelne Bestandteil der zweiten Sub-/Halbsteuergeräte 72, 82, d. h. jede zweite Recheneinheit 72a, 82a über jeweils eine eigene Zuleitung 42, in der eine Sicherung 42a angeordnet ist, mit der zweiten Stromversorgungseinheit 20 verbunden. Und jede zweite Endstufeneinheit 72b, 82b ist über eine eigene Zuleitung 52, in der eine Sicherung 52a angeordnet ist, mit der zweiten Stromversorgungseinheit 20 verbunden.

Die in den Figuren 3 bis 6 gezeigten Varianten der Steer-by-Wire-System 300, 400, 500, 600 haben den Vorteil, daß innerhalb eines Sub-/Halbsteuergerätes 71, 81, 72, 82 die Rechen- und Endstufeneinheit 71a, 71b, 81a, 81b, 72a, 72b; 82a, 82b getrennt abgesichert sind. Dadurch kann, z. B. trotz eines Kurzschlusses in einer Endstufe 71b, 81b, 72b, 82b und damit verbundenem Auslösen der entsprechenden Sicherung 321, 322, 51, 52 die dazugehörige Recheneinheit 71a, 81a, 72a, 82a angesprochen und der Endstufenfehler diagnostiziert werden.

## Patentansprüche

1. Momentensteller für ein Lenksystem (300) in einem Kraftfahrzeug zur Ansteuerung einer Lenkeinrichtung (70, 80), der mindestens zwei elektrische Einheiten (71, 72, 81, 82) umfasst, wobei jeder der elektrischen Einheiten (71, 72, 81, 82) eine eigene, über mindestens eine Sicherung (311a, 312a, 321a, 322a) verbundene Stromversorgungseinheit (110, 20) zugeordnet ist, wobei die elektrischen Einheiten (71, 72, 81, 82) jeweils eine Recheneinheit (71a, 72a, 81a, 82a) und eine Endstufeneinheit (71b, 72b, 81b, 82b) aufweisen, die zusammenwirken, und
- mindestens zwei erste elektrische Einheiten (71, 72) einem Handmomentensteller (77) zur Steuerung und/oder Überwachung einer Lenkhandhabe (70) und mindestens zwei zweite elektrische Einheiten (81, 82) einem Radmomentensteller (88) zur Steuerung und/oder Überwachung wenigstens eines gelenkten Fahrzeugrades (80) zugeordnet sind,
**dadurch gekennzeichnet, dass**
- die Endstufeneinheiten (71b, 72b, 81b, 82b) mindestens einer der ersten und mindestens einer der zweiten elektrischen Einheiten (71, 72, 81, 82) über eine erste Zuleitung (321, 322), in der eine gemeinsame Sicherung (321a, 322a) angeordnet ist, mit einer Stromversorgung (10, 20) verbunden sind
- die Recheneinheiten (71a, 72a, 81a, 82a) mindestens einer der ersten elektrischen Einheiten (71, 72, 81, 82) und mindestens einer der zweiten elektrischen Einheiten (71, 72, 81, 82) über eine zweite Zuleitung (311, 312), in der eine gemeinsame Sicherung (311a, 312a) angeordnet ist, mit einer Stromversorgung (10, 20) verbunden sind.

2. Momentansteller nach Anspruch 1, bei dem die Recheneinheit (71a, 81a, 72a, 82a) mindestens ein Sensor
(71c, 81c, 72c, 82c) zur Überwachung einer Lenkeinrichtung (70, 80) und der Endstufeneinheit (71b, 81b, 72b, 82b) wenigstens ein Aktor (71d, 81d, 72d, 82d) zur Steuerung einer Lenkeinrichtung (70, 80) zugeordnet ist.

3. Lenksystem mit einem ersten und einem zweiten Momentensteller (77, 88) gemäß einem der Ansprüche 1 oder 2 bei dem der erste Momentensteller (77, 88) als Handmomentensteller für eine Lenkhandhabe (70) und der zweite Momentensteller (77, 88) als Radmomentensteller für mindestens ein gelenktes Fahrzeugrad (80) dient.

4. Lenksystem nach Anspruch 3, bei dem die Lenkhandhabe (70) und das mindestens eine gelenkte Fahrzeugrad (80) über eine elektronische Regelstrecke (100, 200, 300, 400, 500, 600) miteinander verbunden sind.

5. Lenksystem nach Anspruch 4, das bei Ausfall der elektronischen Regelstrecke (100, 200, 300, 400, 500, 600) eine mechanische Kopplung der Lenkhandhabe (70) mit den gelenkten Fahrzeugrädern (80) bereitstellt.

6. Lenksystem nach einem der Ansprüche 3 bis 5, bei dem alle elektrischen Einheiten (71, 81; 72, 82) in einem einzigen Gehäuse (71e, 72e, 81e, 82e) aufgenommen sind.

7. Lenksystem nach einem der Ansprüche, 3 bis 5, bei dem die elektrischen Einheiten jedes Momentenstellers (77, 88) in einem Gehäuse (71e, 72e, 81c, 82e) aufgenommen sind.

8. Lenksystem nach einem der Ansprüche 3 bis 5, bei dem jede elektrische Einheit (71, 81; 72, 82) in einem eigenen Gehäuse (71e, 72e, 81e, 82e) aufgenommen ist.

## Claims

1. Torque adjuster for a steering system (300) in a motor vehicle for actuating a steering device (70, 80), which torque adjuster comprises at least two electric units (71, 72, 81, 82), each of the electric units (71, 72, 81, 82) being assigned a dedicated current supply unit (10, 20) which is connected via at least one fuse (311a, 312a, 321a, 322a), the electric units (71, 72, 81, 82) having in each case one computing unit (71a, 72a, 81a, 82a) and one output-stage unit (71b, 72b, 81b, 82b) which interact, and
- at least two first electric units (71, 72) being assigned to a manual torque adjuster (77) for controlling and/or monitoring a steering handle (70), and at least two second electric units (81, 82) being assigned to a wheel torque adjuster (88) for controlling and/or monitoring at least one steered vehicle wheel (80),
**characterized in that**
- the output-stage units (71b, 72b, 81b, 82b) of at least one of the first and at least one of the second electric units (71, 72, 81, 82) are connected to a current supply (10, 20) via a first feed line (321, 322), in which a common fuse (321a, 322a) is arranged,
- the computing units (71a, 72a, 81a, 82a) of at least one of the first electric units (71, 72, 81, 82) and at least one of the second electric units (71, 72, 81, 82) are connected to a current supply (10, 20) via a second feed line (311, 312), in which a common fuse (311a, 312a) is arranged.

2. Torque adjuster according to Claim 1, in which the computing unit (71a, 81a, 72a, 82a) is assigned at least one sensor (71c, 81c, 72c, 82c) for monitoring a steering device (70, 80) and the output-stage unit (71b, 81b, 72b, 82b) is assigned at least one actuator (71d, 81d, 72d, 82d) for controlling a steering device (70, 80).

3. Steering system having a first and a second torque adjuster (77, 88) according to either of Claims 1 and 2, in which steering system the first torque adjuster (77, 88) serves as a manual torque adjuster for a steering handle (70) and the second torque adjuster (77, 88) serves as a wheel torque adjuster for at least one steered vehicle wheel (80).

4. Steering system according to Claim 3, in which the steering handle (70) and the at least one steered vehicle wheel (80) are connected to one another via an electronic control system (100, 200, 300, 400, 500, 600).

5. Steering system according to Claim 4 which, if the electronic control system (100, 200, 300, 400, 500, 600) fails, provides a mechanical coupling of the steering handle (70) to the steered vehicle wheels (80).

6. Steering system according to one of Claims 3 to 5, in which all the electric units (71, 81; 72, 82) are accommodated in a single housing (71e, 72e, 81e, 82e).

7. Steering system according to one of Claims 3 to 5, in which the electric units of each torque adjuster (77, 88) are accommodated in a housing (71e, 72e, 81e, 82e) .

8. Steering system according to one of Claims 3 to 5, in which each electric unit (71, 81; 72, 82) is accommodated in a dedicated housing (71e, 72e, 81e, 82e).

## Revendications

1. Dispositif de commande de couple pour un système de direction (300) dans un véhicule automobile pour la commande d'un dispositif de direction (70, 80), qui comprend au moins deux unités électriques (71, 72, 81, 82), chacune des unités électriques (71, 72, 81, 82) étant associée à une unité d'alimentation en courant propre (10, 20), connectée par le biais d'au moins un coupe-circuit (311a, 312a, 321a, 322a), les unités électriques (71, 72, 81, 82) présentant à chaque fois une unité de calcul (71a, 72a, 81a, 82a) et une unité d'étage de sortie (71b, 72b, 81b, 82b), qui coopèrent et
- au moins deux premières unités électriques (71, 72) étant associées à un dispositif de commande de couple manuel (77) pour la commande et/ou la surveillance d'une manette de direction (70) et au moins deux deuxièmes unités électriques (81, 82) étant associées à un dispositif de commande de couple de roue (88) pour la commande et/ou la surveillance d'au moins une roue dirigée du véhicule (80),
**caractérisé en ce que**
- les unités d'étage de sortie (71b, 72b, 81b, 82b) d'au moins l'une des premières et d'au moins une des deuxièmes unités électriques (71, 72, 81, 82) étant connectées par le biais d'une première conduite d'amenée (321, 322), dans laquelle est disposé un coupe-circuit commun (321a, 322a), à une alimentation en courant (10, 20),
- les unités de calcul (71a, 72a, 81a, 82a) d'au moins l'une des premières et d'au moins une des deuxièmes unités électriques (71, 72, 81, 82) étant connectées par le biais d'une deuxième conduite d'amenée (311, 312), dans laquelle est disposé un coupe-circuit commun (311a, 312a), à une alimentation en courant (10, 20).

2. Dispositif de commande de couple selon la revendication 1, dans lequel l'unité de calcul (71a, 81a, 72a, 82a) est associée à au moins un capteur (71c, 81c, 72c, 82c) pour surveiller un dispositif de direction (70, 80) et l'unité d'étage de sortie (71b, 81b, 72b, 82b) est associée à au moins un actionneur (71d, 81d, 72d, 82d) pour la commande d'un dispositif de direction (70, 80).

3. Système de direction comprenant un premier et un deuxième dispositif de commande de couple (77, 88) selon l'une quelconque des revendications 1 ou 2, dans lequel le premier dispositif de commande de couple (77, 88) sert de dispositif de commande de couple manuel pour une manette de direction (70) et le deuxième dispositif de commande de couple (77, 88) sert de dispositif de commande de couple de roue pour au moins une roue dirigée du véhicule (80).

4. Système de direction selon la revendication 3, dans lequel la manette de direction (70) et l'au moins une roue dirigée du véhicule (80) sont connectées l'une à l'autre par le biais d'une section de réglage électronique (100, 200, 300, 400, 500, 600).

5. Système de direction selon la revendication 4, qui, en cas de panne de la section de réglage électronique (100, 200, 300, 400, 500, 600), fournit un accouplement mécanique de la manette de direction (70) aux roues dirigées du véhicule (80) .

6. Système de direction selon l'une quelconque des revendications 3 à 5, dans lequel toutes les unités électriques (71, 81 ; 72, 82) sont reçues dans un boîtier unique (71e, 72e, 81e, 82e).

7. Système de direction selon l'une quelconque des revendications 3 à 5, dans lequel les unités électriques de chaque dispositif de commande de couple (77, 88) sont reçues dans un boîtier (71e, 72e, 81e, 82e).

8. Système de direction selon l'une quelconque des revendications 3 à 5, dans lequel chaque unité électrique (71, 81 ; 72, 82) est reçue dans un boîtier propre (71e, 72e, 81e, 82e).
